(19)

Europäisches
Patentamt

European
Patent Office

Office européen
des brevets

(11) **EP 2 860 028 A1**

(12) **EUROPEAN PATENT APPLICATION**

(43) Date of publication:
15.04.2015 Bulletin 2015/16

(21) Application number: 14186239.1

(22) Date of filing: 24.09.2014

(51) Int Cl.:
*B32B 5/18* (2006.01)          *B32B 7/12* (2006.01)
*B32B 27/06* (2006.01)        *B32B 27/40* (2006.01)
*C09J 7/02* (2006.01)          *H05K 9/00* (2006.01)
*C08J 9/36* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.09.2013 CN 201310446476
25.11.2013 US 201361908435 P

(71) Applicant: Saint-Gobain Performance Plastics
Corporation
Aurora, OH 44202 (US)

(72) Inventors:
• **Guan, Jing**
**Shanghai (CN)**
• **Dong, Yue**
**Shanghai (CN)**
• **Moineau, Georges**
**4651 Battice (BE)**

(74) Representative: **Leidescher, Thomas**
**Zimmermann & Partner**
**Josephspitalstraße 15**
**80331 München (DE)**

(54) **Super thin form gasket and bonding tape**

(57)     A polymer sheet includes a polyurethane core. The polyurethane core has a first major surface and a second major surface opposite the first major surface. The polymer sheet can have at least one functional layer overlying a major surface. The polymer sheet has a thickness $t_{PS}$. The polyurethane core has a thickness $t_{PC}$. In embodiments $t_{PC}$ can at least 0.3 of $t_{PS}$. The polyurethane core can have at least one feature selected from the group:

(i) an elasticity as measured according to the Thin Gauge Elasticity Test of not more than 30 %,
(ii) a loss of tensile strength of not greater than 30% when exposed to UV light according to standard SAE J1960 (Rev. August 2003),
(iii) a thickness of polyurethane core $t_{PC}$ of not greater than 0.2 mm,
(iv) an elongation at break of at least 200 %, and
(v) a tensile strength at break of at least 0.3MPa.

EP 2 860 028 A1

**Description**

**CROSS-REFERENCE TO RELATED APPLICATIONS**

This application claims priority to Chinese application CN201310446476.3, entitled "SUPER THIN FORM GASKET AND BONDING TAPE", by Guan et al., filed September 26, 2013, which is assigned to the current assignee hereof and incorporated herein by reference in its entirety. This application further claims priority under 35 U.S.C. § 119(e) to U.S. Patent Application No. 61/908,435 entitled "SUPER THIN FORM GASKET AND BONDING TAPE", by Guan et al., filed November 25, 2013, which is assigned to the current assignee hereof and incorporated herein by reference in its entirety.

**FIELD OF THE DISCLOSURE**

This disclosure in general relates to polyurethane foam products and in particular to gaskets and bonding tapes for foam core thickness not greater than 0.2mm.

**RELATED ART**

Demand for electronic products has been increasing at an ever accelerating rate. In particular, demand for mobile electronic devices, such as telephones, game consoles, music players, flat screen televisions, laptop computers, and tablet computers, are becoming more prevalent in society than ever before. Such electronic devices and in particular, such mobile electronic devices can be damaged easily when exposed to environmental conditions, particularly humidity or moisture.

In the mobile electronic device industry, there is a trend that the electronic devices are becoming thinner with each generation. Thin gauge gaskets and bonding tapes are used to separate electronic parts or isolate components from the casings. Accordingly, in order to accommodate the spatial limitation in new electronic devices thinner bonding tapes and gaskets are desirable for cellphones.

Compared to polyethylene or acrylic foam gasket and bonding tape, polyurethane (PU) foam gasket and bonding tape show improved performance in tensile recovery, which resulted in better vibrations dissipating and stress distribution. However, super thin gauge conventional PU gasket or bonding tape, wherein the polyurethane core has a thickness of not greater than 0.2 mm are commercially not available.

As such, super thin gauge polyurethane foam sealing gaskets and bonding tapes would be desirable.

**BRIEF DESCRIPTION OF THE DRAWINGS**

The present disclosure may be better understood, and its numerous features and advantages made apparent to those skilled in the art by referencing the accompanying drawings.

FIG. 1, FIG. 2, FIG. 3, FIG. 4, FIG. 5, and FIG. 6 include illustrations of exemplary foam materials useful in making bonding tapes and sealing gaskets
FIG. 7 includes an illustration of an exemplary seal gasket.
FIG. 8A and FIG. 8B include illustrations of an exemplary thin bonding tapes in an electronic device.
FIG. 9 includes an illustration of an exemplary foam material useful in making bonding tapes.
FIG. 10 includes an illustration of an exemplary bonding tape as manufactured for commerce.
FIGs. 11A - 11C include Elasticity test analyses of a thin gauge tape.
FIGs. 12A - 12C include stress/strain analyses thin gauge tape examples.

The use of the same reference symbols in different drawings indicates similar or identical items.

**DETAILED DESCRIPTION**

In a first aspect, a polymer sheet includes a polyurethane core. The polyurethane core has a first major surface and a second major surface opposite the first major surface. The polymer sheet can have at least one functional layer overlying a major surface. The polymer sheet has a thickness $t_{PS}$. The polyurethane core has a thickness $t_{PC}$. In embodiments $t_{PC}$ can be at least 0.3 $t_{PS}$. In other embodiments, the polyurethane core includes a polyurethane polymer. The polyurethane core can have at least one of the following property:

(i) an elasticity as measured according to the Thin Gauge Elasticity Test of not more than 30%,

(ii) a thickness of the foam core $t_{PC}$ in an uncompressed state of not greater than 0.2 mm,
(iii) a loss of tensile strength of not greater than 30% when exposed to UV light according to standard SAE J1960 (Rev. August 2003),
(iv) an elongation at break of at least 200 %, and
(v) a tensile strength at break of at least 0.3MPa.

In a second aspect, an assembly includes a first member and a second member and a gasket or a bonding tape. The gasket or a bonding tape can be compressed between the first member and the second member. The gasket or a bonding tape can include a polyurethane core having a first major surface and a second major surface opposite the first major surface. The polyurethane core can include a polyurethane polymer. The polyurethane core can include one of the above described properties (i) through (v), namely, (i) an elasticity as measured according to the Thin Gauge Elasticity Test of not more than 30%, (ii) a thickness of the foam core in an uncompressed state of not greater than 0.2 mm, (iii) a loss of tensile strength of not greater than 30% when exposed to UV light according to standard SAE J1960 (Rev. August 2003), (iv) an elongation at break of at least 200 %, or (v) a tensile strength at break of at least 0.3MPa.

In a third aspect, a method of preparing a polymer sheet can include preparing a polyurethane dispersion. The method can further include casting the polyurethane dispersion onto a liner. Moreover, the method can include treating the polyurethane dispersion to have a uniform thickness. The method can further include drying the polyurethane dispersion to form a polyurethane core. The polyurethane core has at least one feature selected from the group consisting of:

(i) an elasticity as measured according to the Thin Gauge Elasticity Test of not more than 30%,
(ii) a loss of tensile strength of not greater than 30% when exposed to UV light according to standard SAE J1960 (Rev. August 2003), and
(iii) a thickness in an uncompressed state of not greater than 0.2 mm,
(iv) an elongation at break of at least 200 %, and
(v) a tensile strength at break of at least 0.3MPa.

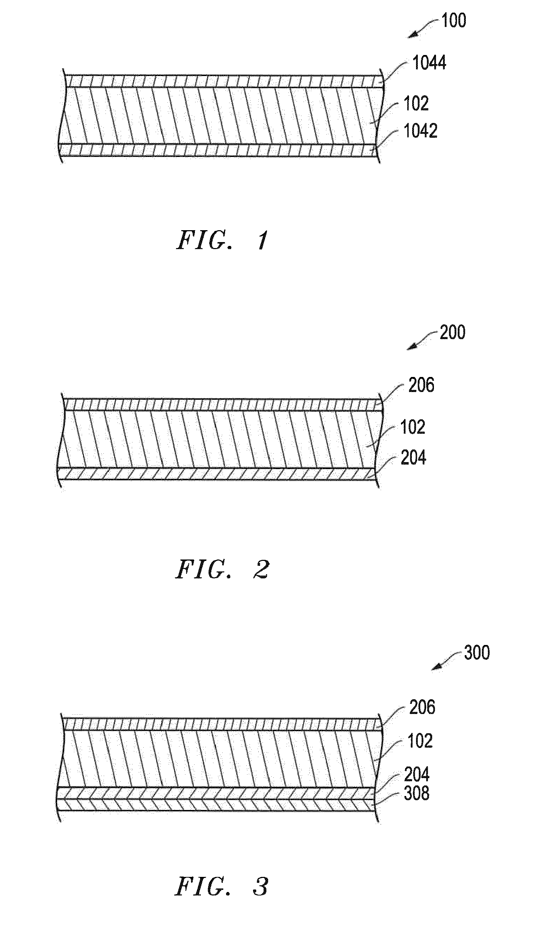

As illustrated in FIG. 1, a bonding tape 100 includes a polyurethane foam layer 102 having a top surface and a bottom surface. The foam layer 102 can be a polyurethane foam formed from a polyurethane dispersion, a surfactant, a thickener, a pigment, and an optional solvent, an optional chain extender or crosslinking agent, and a filler.

As polyurethane dispersions within the meaning of the present invention, the following dispersion can be used, optionally in combination:

a) Anionic aliphatic polyester polyurethane dispersions
Among these, the following products sold by the Bayer MaterialScience AG can be used: Impranil® LP RSC 1380, DL 1537 XP, DL 1554 XP.
b) Anionic aliphatic polyether polyurethane dispersions
Among these, the following products sold by the Bayer MaterialScience AG can be used: Impranil® LP DSB 1069.
c) Aliphatic polycarbonate ester polyether polyurethane dispersions
Among these, the following polyurethane dispersion sold by the Bayer MaterialScience AG can be used: Impranil® DLU Dispersion.
d) Anionic polycarbonate polyurethane dispersions
Among these, the following polyurethane dispersion sold by the Bayer MaterialScience AG can be used: Impranil® DL 2288 XP Dispersion

These are high solids (about 50% to 60%) polyurethane dispersions. All products are free from organic cosolvents, thickening agents and external emulsifiers.

As surfactant, which also act as foam stabilizer, the following compounds can be used: Stokal® STA, Stokal® SR

As thickener, Borchigel® ALA can be used. As pigment, SP-9695 from Shanghai Yuanhe Chemical can be used. As an optional solvent, generic isopropyl alcohol (IPA) can be used.

As an optional cross-linker or chain extender, Cymel® 325 or Imprafix® 2794 XP can be used. Yet, other cross-linkers can be used as well. For example, optional cross-linker can be melamine-based cross-linkers, an isocyanate-based cross-linker, or a polyaziridine based cross-linker. In one particular embodiment, the melamine-based cross-linker is melamine.

The foregoing stated examples for a polyurethane dispersion, a surfactant, a thickener, a pigment, and a solvent, are solely exemplary, wherein each represents a broader class of compounds that can be used. It is understood that amounts and ingredients can be modified or replaced with other commercially available ingredients to obtain the claimed polymer sheet.

For example, the above surfactant can be modified or replaced with another surfactant. The additional or replacing surfactant can be selected from ether sulfates, fatty alcohol sulfates, sarcosinates, organic amine oxides, sulfonates, betaines, organic acid amides, sulfosuccinates, sulfonic acids, alkanolamides, ethoxylated fatty alcohols, sorbinates, or any combination thereof

Referring to FIG. 1, a release liner 1044 overlies the foam core 102 over a major surface. In one embodiment (not illustrated), only one release liner 1042 covers a first major surface of the foam core 102, while the second major surface remains uncovered. In another embodiment, as shown in FIG. 1, two release liners, 1042 and 1044, overlie the two major surfaces of the foam core 102.

The foam core and the at least one release liner form a polymer sheet. In embodiments the polymer sheet has a primary aspect ratio, defined as the ratio of the largest dimension of the polymer sheet, i.e., length, over the second largest dimension, i.e., width of the polymer sheet. The primary aspect ratio of the polymer sheet can be at least about 100, such as at least about 200, at least about 400, at least about 800, at least about 1000, or at least about 1500.

In embodiments, the foam core 102 can have a thickness of not greater than 0.2 mm, such as not greater than 0.19 mm, not greater than 0.18 mm, not greater than 0.17 mm, not greater than 0.16 mm, not greater than 0.15 mm, not greater than 0.14 mm, not greater than 0.13 mm, not greater than 0.12 mm, not greater than 0.11 mm, not greater than 0.10 mm, not greater than 0.09 mm, not greater than 0.08 mm, not greater than 0.07 mm, not greater than 0.06 mm, or not greater than 0.05 mm.

In embodiments, the polyurethane core 102 can have a density as measured according to ASTM D3574 of at least 50 kg/m$^3$ , such as at least about 60 kg/m$^3$, at least about 70 kg/m$^3$, at least about 80 kg/m$^3$, at least about 90 kg/m$^3$, at least about 100 kg/m$^3$, at least about 120 kg/m$^3$, at least about 140 kg/m$^3$, at least about 160 kg/m$^3$, at least about 180 kg/m$^3$, at least about 200 kg/m$^3$, at least about 250 kg/m$^3$, at least about 300 kg/m$^3$, at least about 350 kg/m$^3$, at least about 400 kg/m$^3$, at least about 450 kg/m$^3$, at least about 500 kg/m$^3$, at least about 600 kg/m$^3$, or at least about 700 kg/m$^3$. In other embodiments, the polyurethane core can have a density of not greater than about 1100 kg/m$^3$, such as not greater than about 1000 kg/m$^3$, not greater than about 900 kg/m$^3$, not greater than about 800 kg/m$^3$, not greater than about 700 kg/m$^3$, not greater than about 600 kg/m$^3$, not greater than about 500 kg/m$^3$, not greater than about 450 kg/m$^3$, not greater than about 400 kg/m$^3$, not greater than about 350 kg/m$^3$, not greater than about 330 kg/m$^3$, not greater than about 310 kg/m$^3$, not greater than about 290 kg/m$^3$, not greater than about 270 kg/m$^3$, not greater than about 250 kg/m$^3$, not greater than about 230 kg/m$^3$, not greater than about 210 kg/m$^3$, not greater than about 190 kg/m$^3$, not greater than about 170 kg/m$^3$, not greater than about 150 kg/m$^3$, not greater than about 130 kg/m$^3$, or not greater than about 110 kg/m$^3$.

Moreover, in embodiments, the polyurethane foam core comprises cells. The cells can be closed, semi-open, or open. At least 50% of the cells can have a cell diameter of at least about 20 microns, such as at least about 40 microns, at least about 50 microns, at least about 60 microns, at least about 70 microns, at least about 80 microns, at least about 90 microns, at least about 100 microns, at least about 120 microns, and not greater than about 160 microns. In other embodiments, at least 50% of the cells can have a cell diameter of, not greater than about 160 microns, not greater than about 140 microns, not greater than about 120 microns, not greater than about 100 microns, not greater than about 90 microns, not greater than about 80 microns, not greater than about 70 microns, or not greater than about 60 microns.

In another embodiment, the polyurethane core can be unfoamed, i.e., no mechanical actions are taken to form a froth. In yet one further embodiment, the polyurethane core can in include hollow fillers. Hollow fillers can be inorganic material or organic material. For example, hollow fillers can include as glass spheres, such as 3M™ Glass Bubbles K1 or polymeric microspheres, such as Expancel 053DU40.

Hollow fillers can have a diameter of at least about 20 microns, such as at least about 40 microns, at least about 50 microns, at least about 60 microns, at least about 70 microns, at least about 80 microns, at least about 90 microns, at least about 100 microns, at least about 120 microns, and not greater than about 160 microns. In other embodiments, at hollow fillers can have a diameter of not greater than about 160 microns, not greater than about 140 microns, not greater than about 120 microns, not greater than about 100 microns, not greater than about 90 microns, not greater than about 80 microns, not greater than about 70 microns, or not greater than about 60 microns.

In one embodiment, hollow fillers can have a uniform diameter. In another embodiment, hollow fillers can include a mixture of two types of hollow fillers, one of a first diameter and a second type having a second diameter. In yet another embodiment, an inorganic hollow filler (glass beads) can be mixed with an organic hollow filler (polymeric microspheres). Both hollow fillers can have the same or different diameter.

Moreover, the polyurethane core can further include a flame retardant or a filler. The filler can be selected from polymer microspheres, glass beads, bentonite, kaolin, powdered glass, glass fibers, calcium carbonate, quartz sand, fluoropolymer, thermoplastic, or any combination thereof.

To form the foam, a polyurethane dispersion in mixture with a surfactant, a pigment, an optional solvent, an optional cross-linker, and an optional filler can be frothed mechanically. In an example, the mixture can be frothed in the presence of a gas, such as air, nitrogen, or a noble gas including, for example, helium, neon, or argon.

Blowing agents can be used, alone or as mixtures with each other. Blowing agents can be selected from a broad range of materials, including hydrocarbons, halohydrocarbons, ethers, esters and partially halogenated hydrocarbons, ethers and esters, or the like. Typical physical blowing agents have a boiling point between minus 50°C and positive 100°C, and preferably between about - 50°C and 50°C. Exemplary physical blowing agents include the CFC's (chlorofluorocarbons) such as 1,1-dichloro-1-fluoroethane, 1,1-dichloro-2,2,2-trifluoro-ethane, monochlorodifluoromethane, and 1-chloro-1,1-difluoroethane; the FC's (fluorocarbons) such as 1,1,1,3,3,3-hexafluoropropane, 2,2,4,4-tetrafluorobutane, 1,1,1,3,3,3-hexafluoro-2-methylpropane, 1,1,1,3,3-pentafluoropropane, 1,1,1,2,2-pentafluoropropane, 1,1,1,2,3-pentafluoropropane, 1,1,2,3,3-pentafluoropropane, 1,1,2,2,3-pentafluoropropane, 1,1,1,3,3,4-hexafluorobutane, 1,1,1,3,3-pentafluorobutane, 1,1,1,4,4,4-hexafluorobutane, 1,1,1,4,4-pentafluorobutane, 1,1,2,2,3,3-hexafluoropropane, 1,1,1,2,3,3-hexafluoropropane, 1,1-difluoroethane, 1,1,1,2-tetrafluoroethane, and pentafluoroethane; the fluoroethers such as methyl-1,1,1-trifluoroethylether and difluoromethyl-1,1,1-trifluoroethylether; hydrocarbons such as n-pentane, isopentane, and cyclopentane; methylene chloride; or any combination thereof. Such blowing agents can be used in an amount of 5% to 50% by weight of the reactive composition, typically 10% to 30% by weight of the reactive composition.

Returning to FIG. 1, the foam layer 102 has a top surface and a bottom surface that are characterized by a skin. The skin, for example, is substantially free of pores. For example, the skin associated with the top surface and the bottom surface can be substantially continuous including few, if any, breaks or openings.

Further referring to FIG. 1, the release liner, 1042 or 1044, can include paper, a polymer film, or any combination thereof. An exemplary paper includes a coated paper. An exemplary polymer film is formed of polyolefin, polyester, polyamide, polyvinyl chloride, fluoropolymer, polyimide, or any combination thereof. An exemplary polyolefin includes polyethylene, polypropylene, or any combination thereof. An exemplary polyester includes poly(ethylene terephthalate) (PET). In another example, the polymer film is formed of an aromatic polyester or a polyesteramide. In one particular embodiment, the polymer film is formed of polyethylene terephthalate (PET). In another example, the polymer film is formed of low density polyethylene (LDPE), high density polyethylene (HDPE), polypropylene, or any combination thereof.

In an example, the release liner, 1042 or 1044 can have a thickness in a range of 0.01 mm to 0.1 mm. For example, the liner can have a thickness in a range of 25 microns to 180 microns, such as a range of 25 microns to 150 microns, or even a range of 25 microns to 100 microns. In embodiments, the release liner can have a thickness of at least about 0.01 mm, such as at least about 0.015 mm, at least about 0.02 mm, at least about 0.025 mm, at least about 0.03 mm, at least about 0.035 mm, or at least about 0.04 mm. In other embodiments, the release liner can have a thickness of not greater than about 0.1 mm, such as not greater than about 0.09 mm, not greater than about 0.08 mm, not greater than about 0.075 mm, not greater than about 0.07 mm, not greater than about 0.065 mm, not greater than about 0.06 mm, not greater than about 0.055 mm, or not greater than about 0.05 mm. Further, the release liner can have a base weight in a range of 10 g/m$^2$ to 400 g/m$^2$, such as a range of 30 g/m$^2$ to 350 g/m$^2$, or even a range of 40 g/m$^2$ to 300 g/m$^2$.

In a particular example, the surfaces of the foam layer in contact with the release liner exhibits a desirable range of adhesion to a release liner (PET film) as determined by the method described in the Examples. For example, the surface of the foam layer in contact with the release liner (PET) can exhibit an adhesion of approximately 0.01 N/in or lower. Alternatively, the surface can have an initial adhesion in a range of 0.01 N/in to 0.2 N/in, a range of 0.015 N/in to 0.2 N/in, or even a range of 0.02 N/in to 0.2 N/in.

FIG. 2 illustrates another embodiment of the polymer sheet. As depicted, a topcoat 206 can overlie the first major surface of the foam core 102. The topcoat can include an acrylic coating, a polyurethane coating, or a combination thereof. In a particular embodiment, the topcoat includes a silicone modified polyurethane coating. In embodiments, the topcoat can have thickness of at least about 0.001 mm, such as at least about 0.002 mm, at least about 0.003 mm, or at least about 0.004 mm. In other embodiments, the topcoat can have thickness of not greater than about 0.01 mm, such as not greater than about 0.009 mm, not greater than about 0.008 mm, not greater than about 0.007 mm, not greater than about 0.006 mm, or not greater than about 0.005 mm.

Referring further to FIG. 2, a permanent liner 204 can be disposed over the second major surface. In embodiments, the permanent liner 204 can include a thermoplastic. For example, the thermoplastic is selected from polyethylene, polyester, polyimide, or any combination thereof. In a particular embodiment, the polyethylene includes ultra-high molecular weight polyethylene.

Similar to the release liner, the permanent liner can have a thickness of at least about 0.01 mm, such as at least about 0.015 mm, at least about 0.02 mm, at least about 0.025 mm, at least about 0.03 mm, at least about 0.035 mm, or at least about 0.04 mm. In other embodiments, the permanent liner can have a thickness of not greater than about 0.1 mm, such as not greater than about 0.09 mm, not greater than about 0.08 mm, not greater than about 0.075 mm, not greater than about 0.07 mm, not greater than about 0.065 mm, not greater than about 0.06 mm, not greater than about 0.055 mm, or not greater than about 0.05 mm.

FIG. 3 depicts a further development from the polymer sheet 200 of FIG. 2. In FIG. 3, an adhesive layer 308 is disposed over the permanent liner 204. The adhesive layer can be a pressure sensitive adhesive, such as an acrylic adhesive, a silicon adhesive, a rubber hot melt adhesive, or a hybrid adhesive. Similar to the permanent liner, the adhesive layer 308 can have a thickness of at least about 0.01 mm, such as at least about 0.015 mm, at least about 0.02 mm, at least about 0.025 mm, at least about 0.03 mm, at least about 0.035 mm, or at least about 0.04 mm. In other embodiments, the adhesive layer can have a thickness of not greater than about 0.1 mm, such as not greater than about 0.09 mm, not greater than about 0.08 mm, not greater than about 0.075 mm, not greater than about 0.07 mm, not greater than about 0.065 mm, not greater than about 0.06 mm, not greater than about 0.055 mm, or not greater than about 0.05 mm.

In further examples, the polymer sheet can include subcombinations of the elements shown in FIGs. 1-3. For example, two liners, one being a release liner and one being a permanent liner can be disposed over the first and second major surface, respectively. Alternatively, two permanent liners can overlie both major surfaces. Accordingly, for an assembly having two permanent liners, one or both liner can be overlaid with an adhesive.

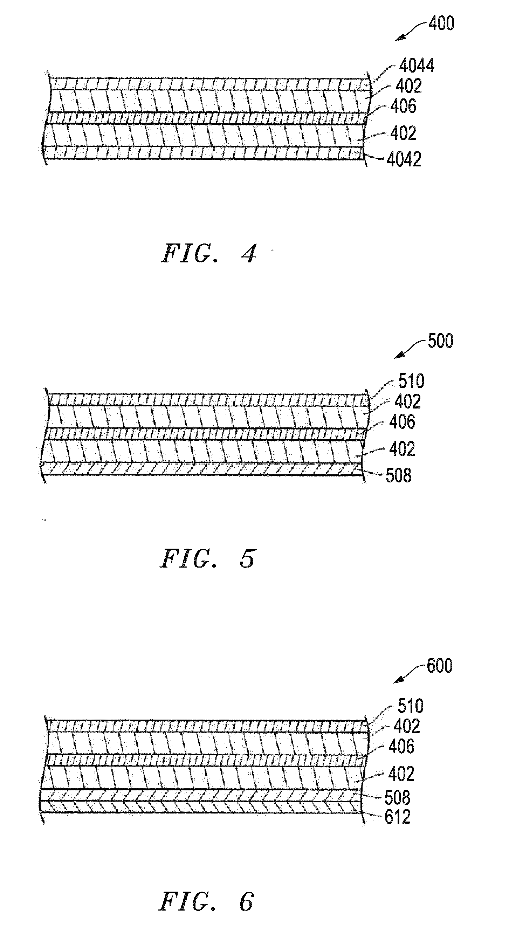

FIGs. 4-6 are analogous to FIGs. 1-3 with the difference that the foam core has a film 406 embedded. Accordingly, a film 406 has two major surfaces, on both of which a polyurethane foam core 402 is disposed. The stack of film 406 and polyurethane foam layers 402 (402/406/402) form now the core of the polymer sheet.

Analogous to FIG. 1, the core stack 402/406/402 in FIG. 4 can be overlaid with release liners 4042 and 4044. Likewise analogous to FIG. 2, the core stack 402/406/402 in FIG. 5 can be covered by a topcoat 510 (analogous to topcoat 206) and a permanent liner 508 (analogous to permanent liner 204). Additionally, as shown in FIG. 6, the polymer sheet 500 of can further include an adhesive layer 612 (analogous to layer 308) to form polymer sheet 600.

The film 406 functions to stabilize the core during when torsion and shear forces are affecting the polymer sheet. The film 406 can include a thermoplastic. For example, the thermoplastic can be selected from polyethylene, polyester, polyimide, or any combination thereof. In one particular example, the polyethylene includes ultra-high molecular weight polyethylene. Similar to the permanent liner, the film 406 can have a thickness of at least about 0.01 mm, such as at least about 0.015 mm, at least about 0.02 mm, at least about 0.025 mm, at least about 0.03 mm, at least about 0.035 mm, or at least about 0.04 mm. In other embodiments, the adhesive layer can have a thickness of not greater than about 0.1 mm, such as not greater than about 0.09 mm, not greater than about 0.08 mm, not greater than about 0.075 mm, not greater than about 0.07 mm, not greater than about 0.065 mm, not greater than about 0.06 mm, not greater than about 0.055 mm, or not greater than about 0.05 mm. Moreover, the thickness of stack 402/406/402 can be identical to the thickness of the foam core 102 as described above.

In particular, the foam layer is formed of a polyurethane foam having a structural feature where the foam core forms the major component of the polymer sheet as shown in the cross-sectional thickness ratio, where $t_{PC}$ (thickness of the polyurethane core) is at least 0.3 $t_{PS}$, such as at least 0.35 $t_{PS}$, least 0.4 $t_{PS}$, least 0.45 $t_{PS}$, least 0.5 $t_{PS}$, least 0.55 $t_{PS}$, least 0.6 $t_{PS}$, least 0.65 $t_{PS}$, least 0.7 $t_{PS}$, least 0.75 $t_{PS}$, least 0.8 $t_{PS}$, least 0.85 $t_{PS}$, least 0.9 $t_{PS}$, or least 0.95 $t_{PS}$.

In another embodiment, the cross-sectional thickness ratio, where $t_{PC}$ (thickness of the polyurethane core) is not greater than 0.8 $t_{PS}$, such as not greater than 0.75 $t_{PS}$, not greater than 0.7 $t_{PS}$, not greater than 0.65 $t_{PS}$, or not greater than 0.6 $t_{PS}$.

Moreover, the foam layer is formed of a polyurethane foam having inherent properties such as Elasticity, Creep, Elongation at Break, Tensile Strength at Break, and Loss of Tensile Strength after UV Exposure.

The elongation at break of the polyurethane foam can be at least about 200 %, such as at least about 300 %, at least about 400 %, at least about 500 %, at least about 600 %, at least about 700 %, at least about 800 %, at least about 900 %, at least about 1000 %, at least about 1200 %, at least about 1400 %, at least about 1600 %, or at least about 1800 %.

The Tensile Strength at Break can be at least about 0.3 MPa, such as at least about 0.5 MPa, at least about 0.7 MPa, at least about 1 MPa, at least about 1.5 MPa, at least about 2 MPa, at least about 2.5 MPa, at least about 3 MPa, at least about 3.5 MPa, at least about 4 MPa, at least about 4.5 MPa, at least about 5 MPa, at least about 5.5 MPa, or at least about 6 MPa.

The Loss of Tensile Strength when exposed to UV light according to standard SAE J1960 (Rev. August 2003) is not greater than about 30 %, such as not greater than about 25 %, not greater than about 20 %, not greater than about 15 %, not greater than about 10 %, or not greater than about 5 %. In another example, the Loss of Tensile Strength can be at least about 5 %, such as at least about 8 %, or at least about 10 %.

The difference or distance between two colors is a metric of interest in color science. It allows to quantify a notion that would otherwise be described with adjectives in the eye of a viewer. Such biased description is a detriment to anyone whose work is color critical. Common definitions make use of the Euclidean distance in a device independent color space. The International Commission on Illumination (CIE) calls their distance metric $\Delta E^{*}_{ab}$ (also called $\Delta E^{*}$ or $\Delta E$) used to denote difference of color sensation. Different studies have proposed different $\Delta E$ values that have a JND (just noticeable difference). For bonding tape products used in the electronic and automotive industry, the products begin to show a JND between $\Delta E$'s of 2.5 and 4.0. These non-uniformities are important because the human eye is more sensitive to certain colors than others. A good metric should take this into account in order for the notion of a "just noticeable difference" to have meaning. Otherwise, a certain $\Delta E$ that may be insignificant between two colors that the eye is insensitive to may be conspicuous in another part of the spectrum. The 1976 formula is the first color-difference formula that related a measured to a known Lab value. This formula has been succeeded by the 1994 and 2000 formula's because the Lab space turned out to be not as perceptually uniform as intended, especially in the saturated regions.

This means that this formula rates these colors too highly as opposed to other colors. Using $(L_2^*, a_2^*, b_2^*)$ and $(L_1^*, a_1^*, b_1^*)$ of two colors in L*a*b*, $\Delta E$ is:

$$\Delta E^* = \sqrt{(L_2^* - L_1^*)^2 + (a_2^* - a_1^*)^2 + (b_2^* - b_1^*)^2}$$

For $\Delta E$ of 4.0 or less there is generally no noticeable difference between the colors, while for a $\Delta E$ of more than 4.0, a color difference becomes noticeable. Since bonding tapes or gaskets in the automotive or electronic industry can be visibly exposed, it is desirable to have little color change as the product is exposed to exterior factors, such as ageing, weathering, operation conditions (temperature, irradiation, etc.). Depending on the particular color of bonding tapes and gaskets, a color change or discoloration can be noticeable at lower $\Delta E$, such as at not greater than 3.8, not greater than 3.6, not greater than 3.4, not greater than 3.2, not greater than 3.0, not greater than 2.8, not greater than 2.6, not greater than 2.4, not greater than 2.2, not greater than 2.0, not greater than 1.8, not greater than 1.6, or not greater than 1.4.

The discoloration when exposed to UV light according to standard SAE J1960 (Rev. August 2003) is expressed by measuring the CIE values of a sample before and after exposure. In an embodiment, $\Delta E$ can be not greater than 10.0, such as not greater than 9, not greater than 8, not greater than 7, not greater than 6, not greater than 5, not greater than 4, not greater than 3.8, not greater than 3.6, not greater than 3.4, not greater than 3.2, not greater than 3.0, not greater than 2.8, not greater than 2.6, not greater than 2.4, not greater than 2.2, not greater than 2.0, not greater than 1.8, not greater than 1.6, or not greater than 1.4. In another embodiment, $\Delta E$ can be not greater than 1.2, such as not greater than 1.1, not greater than 1.0, not greater than 0.9, not greater than 0.85, not greater than 0.8, not greater than 0.75, not greater than 0.7, or not greater than 0.65.

Yellowing of bonding tape is a common observation where tapes are exposed to irradiation such as regular daylight, e.g., bonding tapes between transparent sheet, such as the display of an electronic device or tapes at the rim or between window panes. In CIE terms, yellowing of materials shows a major shift of the $b^*$ value of the bonding tape as opposed to a change of the $L^*$ or $a^*$. The shift of the $b^*$ value, $\Delta b^*$ or $\Delta b$, of two colors $(L_2^*, a_2^*, b_2^*)$ and $(L_1^*, a_1^*, b_1^*)$, is:

$$\Delta b^* = \sqrt{(b_2^* - b_1^*)^2}$$

As for the discoloration, the yellowing, $\Delta b$, can be determined by exposing a sample to UV light according to standard SAE J1960 (Rev. August 2003) and measuring the CIE values of a sample before and after exposure. In an embodiment, $\Delta b$ can be not greater than 5, such as not greater than 4, not greater than 3, not greater than 2, not greater than 1.5, not greater than 1.4, not greater than 1.3, not greater than 1.2, not greater than 1.1, not greater than 1.0, not greater than 0.9, not greater than 0.85, not greater than 0.8, not greater than 0.75, not greater than 0.7, not greater than 0.65, not greater than 0.6, not greater than 0.55, not greater than 0.5.

In an example, the foam layer has a density of not greater than about 1100 kg/m$^3$ as measured in accordance with ASTM D3574. For example, the density can be not greater than about 800 kg/m$^3$, such as not greater than about 700 kg/m$^3$, not greater than about 600 kg/m$^3$, not greater than about 500 kg/m$^3$, not greater than about 450 kg/m$^3$, not greater than about 400 kg/m$^3$, not greater than about 350 kg/m$^3$, not greater than about 330 kg/m$^3$, not greater than about 310 kg/m$^3$, not greater than about 290 kg/m$^3$, not greater than about 270 kg/m$^3$, not greater than about 250 kg/m$^3$, not greater than about 230 kg/m$^3$, not greater than about 210 kg/m$^3$, not greater than about 190 kg/m$^3$, not greater than about 170 kg/m$^3$, not greater than about 150 kg/m$^3$, not greater than about 130 kg/m$^3$, or not greater than about 110 kg/m$^3$. In an example, the density of the foam layer is in a range of 50 kg/m$^3$ to 250 kg/m$^3$, such as a range of 60 kg/m$^3$ to 250 kg/m$^3$, a range of 100 kg/m$^3$ to 250 kg/m$^3$, a range of 100 kg/m$^3$ to 200 kg/m$^3$, or even a range of 125 kg/m$^3$ to 200 kg/m$^3$.

In a particular example, the polymer sheet is formed by applying a froth onto a moving carrier for a drying or curing oven. The resulting film is rolled for later storage and can be dispensed and cut into a desirable shape to form a sealing gasket or bonding tape. The froth can be formed from polyurethane dispersions. The polyurethane dispersions can be frothed to include a gas, such as air, nitrogen, or a noble gas including, for example, helium, neon, or argon.

In embodiments, the froth can have froth density of at least about 100 g/L, such as at least about 110 g/L, at least about 120 g/L, at least about 130 g/L, at least about 140 g/L, at least about 150 g/L, at least about 170 g/L, at least about 190 g/L, at least about 210 g/L, at least about 230 g/L, or at least about 250 g/L. In yet other embodiments, the froth density is not greater than about 1200 g/L, such as not greater than about 1100 g/L, not greater than about 1000 g/L, not greater than about 900 g/L, not greater than about 800 g/L, not greater than about 700 g/L, not greater than about 600 g/L, not greater than about 500 g/L, not greater than about 400 g/L, or not greater than about 300 g/L.

Frothing and also ingredients provide for a certain froth viscosity. In embodiments, the froth can have a viscosity of not greater than about 18000 cps, such as not greater than about 17000 cps, not greater than about 16000 cps, not greater than about 15000 cps, not greater than about 14000 cps, not greater than about 13000 cps, not greater than about 12000 cps, not greater than about 11000 cps, not greater than about 10000 cps, not greater than about 9000 cps, not greater than about 8000 cps, not greater than about 7000 cps, not greater than about 6000 cps, or not greater than about 5000 cps. In other embodiments, the froth can have a viscosity of at least about 800 cps, such as at least about 900 cps, at least about 1000 cps, at least about 1500 cps, at least about 2000 cps, at least about 2500 cps, at least about 3000 cps, at least about 3500 cps, or at least about 4000 cps.

The froth is applied as a foam layer to a carrier, which, for example, moves the foam layer through an oven. The carrier can be a release liner, a permanent liner, or a removable carrier having a non-stick surface. For example, the carrier can be coated with a release agent, such as a silicone release coating, or can include a non-stick material, such as a fluoropolymer, e.g., Teflon®.

Alternatively, a blade or knife can spread the mixture to form a uniform thickness in the foam layer before it enters the oven. Alternatively, front rollers associated with the film can act to control the thickness of the mixture entering the oven.

After deposition on the carrier, the foam layer enters an oven to further facilitate foaming and cross-linking. The oven can have a temperature in a range of 50°C to 180°C, such as a range of 50°C to 120°C, a range of 70°C to 115°C, or even a range of 100°C to 115°C. In embodiments, the temperature can be at least about 50 °C, such as at least about 60 °C, at least about 70 °C, at least about 80 °C, at least about 90 °C, at least about 100 °C, at least about 110 °C, at least about 120 °C, or at least about 130 °C. In other embodiments, the temperature is not greater than about 180 °C, such as not greater than about 170°C, not greater than about 160°C, or not greater than about 150°C.

In one alternative, a vapor permeable film, such as a woven or non-woven layer can be placed on the foam layer prior entering the oven.

After drying or at least partially curing within the oven, the foam layer can be rolled into a roll. Alternatively, one or more of the film or carrier can remain attached to the foam to form a liner such as a release liner.

As another option, a liner can be applied over the carrier. The froth can be applied over the liner. After drying or at least partially curing, the liner is separated from the carrier and rolled with the polyurethane foam into a roll. Optionally, a release coating agent, such as a silicone release coating agent, can be applied between the carrier and the liner or between the liner and the froth. Similarly, the film is separated from the polyurethane foam layer. The resulting construction includes a foam layer and liner. The liner can be a permanent liner or a release liner.

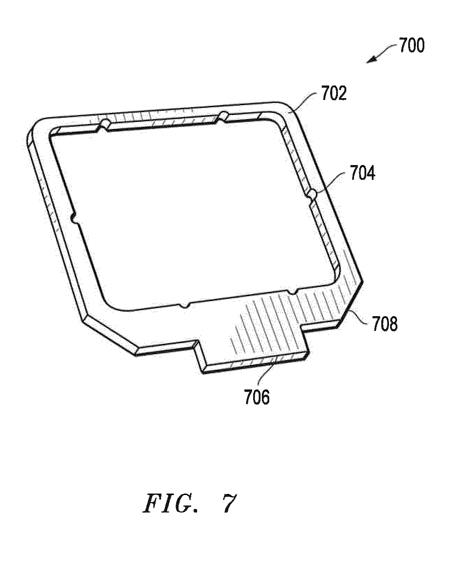

In a particular example, the resulting film and optional liner configurations can be dispenses from a roll and cut into shapes to form sealing gaskets. For example, FIG. 7 includes an illustration of an exemplary sealing gasket 700 cut from a polymer sheet. The sheet, including a film layer 702, can be cut into desirable shapes including inner contours 704 or outer contours 706. For example, the shape of the sealing gasket can be stamped, die cut, or laser cut from the dispensed film layers.

A difference between polymer sheets made from polyurethane dispersions (PUD) and polymer sheets made from polyurethane precursors such as polyols and isocyanates in the final product is the amount of aromatic residues and aromatic polymer groups in the polymeric scaffold. In general, foams made from polyols and isocyanates have a higher content of aromatic residues. Accordingly, as an inherent property of foams comprising aromatic groups, these foams are more susceptible to UV exposure than foams which have a lesser aromatic content or a higher aliphatic content. As a result, mechanical properties such as tensile strength of foams having an aromatic content decrease upon exposure to UV light. Conversely, foams from PUD, which have lesser amounts of aromatic residues or aromatic groups in the polymer, would show a reduced loss of mechanical properties, e.g., tensile strength, after extended exposure to UV radiation. Therefore, one option to differentiate between foams made from precursors, polyols and isocyanates, and foams made from PUD is by exposing samples to UV radiation and measuring loss of a mechanical property, such as elongation at break or tensile strength at break. Such measurements can be made according to SAE J1960 (Rev. August 2003). The sample that shows a smaller amount of loss of mechanical property is likely the sample that was made from PUD.

Another option to differentiate between a PUD made foam and traditionally made foam is by determining the amount of polymer catalyst in the resulting foam product. Since PUD are already polymerized polyurethane mixtures, no or little amounts of catalysts are necessary to complete the reaction to the final product. Accordingly, PUD foams have a lower content of catalysts. A number of the catalysts conventionally used to catalyze the reaction of the isocyanate component with the active hydrogen-containing component can be employed in the foam preparation. Such catalysts include organic and inorganic acid salts of, and organometallic derivatives of bismuth, lead, tin, iron, antimony, uranium, cadmium, cobalt, thorium, aluminum, mercury, zinc, nickel, cerium, molybdenum, vanadium, copper, manganese, and zirconium, as well as phosphines and tertiary organic amines. Examples of such catalysts are dibutyltin dilaurate, dibutyltin diacetate, stannous octoate, lead octoate, cobalt naphthenate, trieyhylamine, triethylenediamine, N,N,N',N'-tetramethylenediamine, 1,1,3,3-tetramethylguanidine, N,N,N',N'-tetramethyl-1,3-butanediamine, N,N-dimethylethanolamine, N,N-diethylethanolamine, 1,3,5-tris (N,N-dimethylaminopropyl)-s-hexahydrotriazine, o- and p-(dimethylaminomethyl) phenols, 2,4,6-tris(dimethylaminomethyl) phenol, N,N-dimethylcyclohexylamine, pentamethyldiethylenetriamine, 1,4-diazobicyclo [2.2.2] octane, N-hydroxyl-alkyl quaternary ammonium carboxylates and tetramethylammonium formate, tetramethylammonium acetate, tetramethylammonium 2-ethylhexanoate and the like, as well as compositions comprising any one of the foregoing catalysts. Accordingly, the polyurethane core of the present embodiments include a catalyst in an amount less than for conventional polyurethanes, namely of not greater than about 0.3 wt%, such as not greater than 0.2 wt%, not greater than 0.1 wt%, not greater than 0.05 wt%, not greater than 0.01 wt%, not greater than 0.005 wt%, not greater than 0.001 wt%, not greater than 0.0005 wt%, or not greater than 0.0001 wt%. In embodiments, the polyurethane catalyst can be selected from the group consisting of triethylamine, tributylamine, N-methylmorpholine, N-ethylmorpholine, N,N,N',N'-tetramethylethylenediamine, pentamethyldiethylenetriamine, 1,4-diazabicyclo(2.2.2)octane, N-methyl-N'-dimethylaminoethylpiperazine, bis-(dimethylaminoalkyl)piperazines, N,N-dimethylbenzylamine, N,N-dimethylcyclohexylamine, N,N-diethylbenzylamine, bis-(N,N-diethylaminoethyl) adipate, N,N,N',N'-tetramethyl-1,3-butanediamine, N,N-dimethyl-β-phenylethylamine, 1,2-dimethylimidazole, 2-methylimidazole, 2,2-bis-(dimethylaminoethyl) ether, di-n-octyltin mercaptide, tin(II) acetate, tin(II) octoate, tin(II) ethylhexoate, tin(II) laurate, dibutyltin(IV) oxide, dibutyltin(IV) dichloride, dibutyltin(IV) diacetate, dibutyltin(IV) dilaurate, dibutyltin(IV) maleate, and dioctyltin(IV) diacetate.

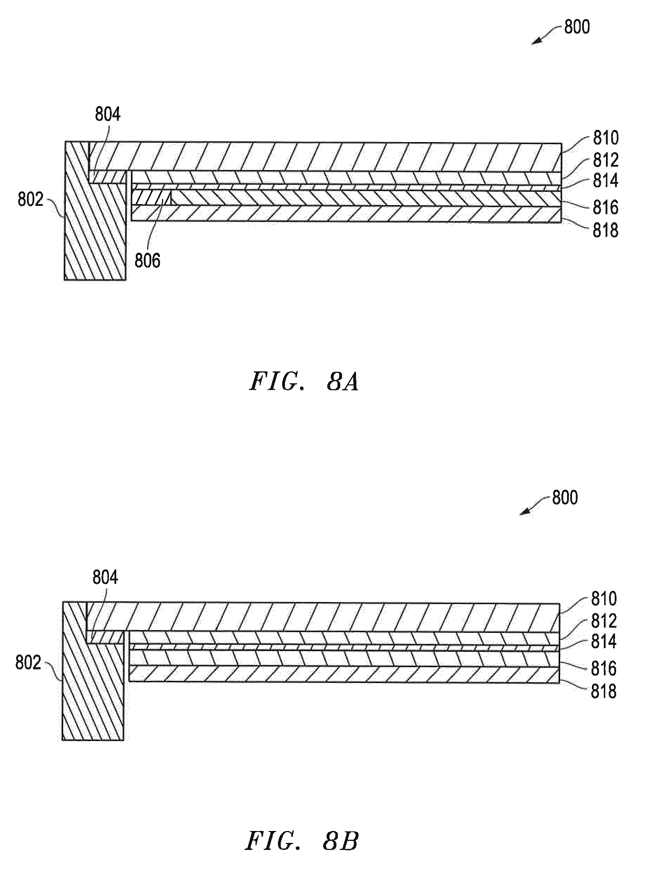

FIGs. 8A and 8B depict a partial cross-sectional view and components of an electronic device 800, such as smart phone 800 having a casing 802, which holds the cover glass 810. The cover glass 810 is adhered to the casing 802 using thin gauge bonding tape 804. A sensor glass 814 lies underneath the cover glass 810. The sensor glass 814 is bonded to the cover glass 810 by an optical clear adhesive 812. A liquid crystal display 818 is positioned underneath the sensor glass 814.

In one embodiment (FIG. 8A), the liquid crystal display 818 adheres to the sensor glass 814 by a thin gauge bonding tape 806 which is applied along the edge of the liquid crystal display. Using such a set up the space 816 between the liquid crystal display 818 and the sensor glass 814 can be empty.

In an alternative embodiment (FIG. 8B), the liquid crystal display 818 adheres to the sensor glass 814 using another optical clear adhesive 816.

FIGs. 8A and 8B are illustrative for the use of thin gauge bonding tapes. Thin gauge bonding tapes can further be used to bond other components of an electronic device such as a smart phone. Besides the adhesion function of the bonding tapes, it also can be seen that bonding tape 804 has sealing function to separate external factors (dust and moisture) from the internal components, while bonding tape 806 has a spacing and a cushioning function, both of which need to be constant as the device heats and cools during periods of use. These examples demonstrate the broad spectrum of demand that bonding tapes (and gaskets made from bonding sheets) have to satisfy.

In embodiments, the gaskets are compressed between first and second members of an electronic device, such as a circuit, a display part, an electronic screen, an electronic screen cover, a frame, a housing part, or any combination thereof. At least one of the components can be an electronic screen, the electronic screen including diodes, such as LEDs or LCDs. The gaskets can be compressed to at least 10%, such as at least about 20%, at least about 25%, at least about 30%, at least about 35%, at least about 40%, at least about 45%, at least about 50%, at least about 55%, at least about 60%, at least about 65%, at least about 70%, or at least about 75%. In other embodiments, the compression is not greater than about 90%, such as not greater than about 85%, not greater than about 80%, not greater than about 75%, not greater than about 70%, not greater than about 65%, not greater than about 60%, not greater than about 55%, not greater than about 50%, not greater than about 45%, or not greater than about 45%.

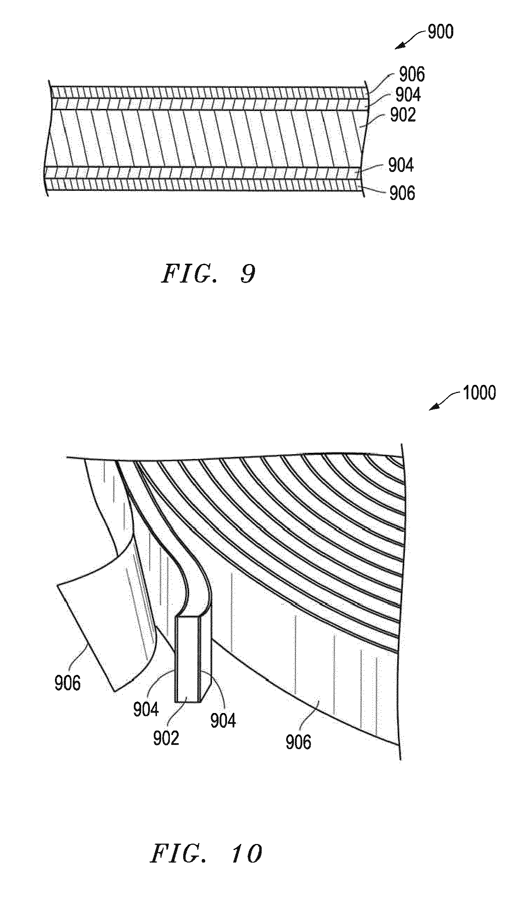

FIG. 9 depicts a cross-sectional view of a bonding tape 900 having a foam core 902, which can be identical to foam core 102 of FIGs. 1-3 or foam core stack 402/406/402 of FIGs. 4-6. The foam core is covered on both major surfaces with an adhesive layer 904, which is in structure and quality identical to adhesive layer 308 (FIG.3) and 612 (FIG. 6). The adhesive layer 904 can be covered with one or two release liners 906 to ensure that the adhesive properties remain intact until deployment.

FIG. 10 depicts another example of the bonding tape 900 in a rolled configuration. Here, the tape has only one release liner 906. The single release liner 906 serves as a protection layer for both adhesive layers 904 since the bonding tape is formed into a roll 1000.

Polymer sheets can be prepared by mixing polyurethane dispersion and other ingredients or optional additives such as fillers, surfactants, thickener, cross-linkers, pigments, etc., as described above.

In some embodiments, the mix can be formed into a froth by foaming the mix. Foaming can occur mechanically either by agitation or blowing a gas, such as nitrogen or air into the mix. Alternatively, foaming can occur non-mechanically by adding hollow fillers, such as glass beads and/or polymeric microspheres.

The mix or froth is casted onto a release liner and knifed or spread evenly. A gap is used to control the thickness of the mix or froth. After the gap, the mix or froth is transported into an oven for drying and curing. The drying or curing process occurs in the oven at a temperature range from 60 °C to 160 °C.

After the cured polyurethane sheet leaves the oven, the sheet can undergo further processing, such as applying one or more functional layers, such as an adhesive layer onto the polyurethane sheet. Alternatively, the polyurethane sheet can be wound into rolls for storage. Rolls can undergo further processing at a later point in time, such as cutting into smaller rolls, die cutting of gaskets, layering of functional layers.

The following item list shows non-limiting exemplary embodiments of the present invention:

Item 1. A polymer sheet comprising:

a polyurethane core, having a first major surface and a second major surface opposite the first major surface; and at least one functional layer, wherein the polymer sheet has a thickness $t_{PS}$ and the polyurethane core has a thickness $t_{PC}$, wherein $t_{PC}$ is at least 0.3 of $t_{PS}$,

wherein the polyurethane core comprises a polyurethane polymer, wherein the polyurethane core has at least one feature selected from the group consisting of:

(i) an elasticity as measured according to the Thin Gauge Elasticity Test of not more than 30%,
(ii) a loss of tensile strength of not greater than 30% when exposed to UV light according to standard SAE J1960 (Rev. August 2003),
(iii) a thickness of polyurethane core $t_{PC}$ of not greater than 0.2 mm,
(iv) an elongation at break of at least 200 %, and
(v) a tensile strength at break of at least 0.3MPa.

Item 2. The polymer sheet according to item 1, wherein the polymer sheet has a primary aspect ratio of at least about 100, such as at least about 200, at least about 400, at least about 800, at least about 1000, or at least about 1500.

Item 3. The polymer sheet according to item 1, wherein the functional layer is selected from the group of a release liner, a topcoat, an adhesive, or any combination thereof.

Item 4. The polymer sheet according to item 3, wherein the topcoat includes an acrylic coating, a polyurethane coating, or a combination thereof.

Item 5. The polymer sheet according to item 4, wherein the polyurethane coating includes a silicone modified polyurethane coating.

Item 6. The polymer sheet according to item 1, wherein the functional layer has thickness of at least about 0.001 mm, such as at least about 0.002 mm, at least about 0.003 mm, or at least about 0.004 mm.

Item 7. The polymer sheet according to item 1, wherein the functional layer has a thickness of not greater than about 0.01 mm, such as not greater than about 0.009 mm, not greater than about 0.008 mm, not greater than about 0.007 mm, not greater than about 0.006 mm, or not greater than about 0.005 mm.

Item 8. The polymer sheet according to item 3, wherein the adhesive is a pressure sensitive adhesive selected from an acrylic adhesive, a silicon adhesive, a rubber hot melt adhesive, an acrylic copolymer, a rubber acrylic copolymer, or any combination thereof.

Item 9. The polymer sheet according to item 3, wherein the adhesive has a weight of at least 40 $g/m^2$, such as at least 45 $g/m^2$, at least 50 $g/m^2$, at least 55 $g/m^2$, at least 60 $g/m^2$, at least 65 $g/m^2$, at least 70 $g/m^2$, as at least 75 $g/m^2$, or at least 80 $g/m^2$.

Item 10. The polymer sheet according to item 3, wherein the adhesive has a weight of not greater than 120 $g/m^2$, such as not greater than 115 $g/m^2$, not greater than 110 $g/m^2$, not greater than 105 $g/m^2$, not greater than 100 $g/m^2$, not greater than 95 $g/m^2$, or not greater than 90 $g/m^2$.

Item 11. The polymer sheet according to item 1, wherein the polymer sheet is in form of a roll.

Item 12. An assembly comprising:

a first member and a second member; and
a bonding tape compressed between the first member and the second member, wherein the bonding tape includes a polyurethane core, having a first major surface and a second major surface opposite the first major surface; and
the bonding tape is compressed between the first and the second member at a compression of at least about 5%,

wherein the polyurethane core comprises polyurethane polymer, wherein the polyurethane core has at least one feature selected from the group consisting of:

(i) an elasticity as measured according to the Thin Gauge Elasticity Test of not more than 30%,

(ii) a loss of tensile strength of not greater than 30% when exposed to UV light according to standard SAE J1960 (Rev. August 2003),

(iii) a thickness of polyurethane core $t_{PC}$ of not greater than 0.2 mm,

(iv) an elongation at break of at least 200 %, and

(v) a tensile strength at break of at least 0.3MPa.

Item 13. The assembly according to item 12, wherein the assembly is an electronic device and the first member and the second member are components of the electronic device.

Item 14. The assembly according to item 13, wherein the components are selected from a circuit, a display part, an electronic screen, an electronic screen cover, a frame, a housing part, or any combination thereof.

Item 15. The assembly according to item 14, wherein the at least one of the components is an electronic screen, the electronic screen including diodes.

Item 16. The assembly according to item 15, wherein the diodes include LEDs or LCDs.

Item 17. The polymer sheet or the assembly according to any one of items 1 through 16, wherein the thickness in an uncompressed state of the polyurethane core is at least about 0.05 mm, such as at least about 0.06 mm, at least about 0.08 mm, at least about 0.1 mm, at least about 0.12 mm, at least about 0.14 mm, at least about 0.16 mm, or at least about 0.18 mm.

Item 18. The polymer sheet or the assembly according to any one of items 1 through 16, wherein the polyurethane core has a thickness of not greater than about 0.20 mm, such as not greater than about 0.18 mm, not greater than about 0.16 mm, not greater than about 0.14 mm, not greater than about 0.12 mm, not greater than about 0.10 mm, not greater than about 0.08mm, not greater than about 0.06 mm, or not greater than about 0.05 mm.

Item 19. The polymer sheet or the assembly according to any one of items 1 through 16, wherein the elasticity is not greater than 30 %, such as not greater than 25 %, not greater than 20 %, not greater than 15 %, not greater than 10 %, not greater than 8 %, not greater than 7 %, not greater than 6 %, not greater than 5 %, not greater than 4.5 %, not greater than 4.0 %, not greater than 3.5 %, not greater than 3.0 %, not greater than 2.5 %, not greater than 2.0 %, not greater than 1.5 %, not greater than 1.0 %, not greater than 0.5 %, not greater than 0.2 %, not greater than 0.1 %.

Item 20. The polymer sheet or the assembly according to any one of items 1 through 16, wherein the elasticity is at least 0.0001%.

Item 21. The polymer sheet or the assembly according to any one of items 1 through 16, wherein the loss of tensile strength when exposed to UV light according to standard SAE J1960 (Rev. August 2003) is not greater than about 25%, such as not greater than about 20%, not greater than about 15%, not greater than about 10%, or not greater than about 5%.

Item 22. The polymer sheet or the assembly according to any one of items 1 through 16, wherein the polyurethane core is based on a polyurethane dispersion.

Item 23 The polymer sheet or the assembly according to item 35, wherein the polyurethane dispersion have a solid content of at least about 40 % to about 60 %.

Item 24. The polymer sheet or the assembly according to any one of items 1 through 16, wherein the polyurethane core is formed from a polyurethane dispersion.

Item 25. A method of preparing a polymer sheet, the method comprising

preparing a polyurethane dispersion;

casting the polyurethane dispersion onto a liner;

treating the polyurethane dispersion to have a uniform thickness;

drying the polyurethane dispersion to form a polyurethane core, wherein the polyurethane core has at least one feature selected from the group consisting of:

(i) an elasticity as measured according to the Thin Gauge Elasticity Test of not more than 30%,

(ii) a loss of tensile strength of not greater than 30% when exposed to UV light according to standard SAE J1960 (Rev. August 2003),

(iii) a thickness in an uncompressed state of not greater than 0.2 mm,

(iv) an elongation at break of at least 200 %, and

(v) a tensile strength at break of at least 0.3MPa.

Item 26. The method according to item 25 further comprising applying a functional layer onto the polyurethane core.

Item 27. The method according to any one of items 25 through 26, wherein the polyurethane dispersion further comprises a surfactants, a pigment, a flame retardant, a thickener, a filler, or any combination thereof.

Item 28. The method according to item 27, wherein the filler includes hollow fillers.

Item 29. The method according to item 28, wherein the hollow fillers are glass beads, polymeric microspheres, or any combination thereof.

Item 30. The method according to item 28, wherein the hollow fillers include a diameter of at least at least about 20 microns, such as at least about 40 microns, at least about 50 microns, at least about 60 microns, at least about 70 microns, at least about 80 microns, at least about 90 microns, at least about 100 microns, or at least about 120 microns.

Item 31. The method according to item 28, wherein the hollow fillers include a diameter of not greater than about 160 microns, such as not greater than about 140 microns, not greater than about 120 microns, not greater than about 100 microns, not greater than about 90 microns, not greater than about 80 microns, not greater than about 70 microns, or not greater than about 60 microns.

Item 32. The method according to item 25, further comprising foaming the polyurethane dispersion prior to casting.

Item 33. The method according to item 32, wherein foaming includes mechanical foaming.

Item 34. The method according to item 33, wherein mechanical foaming includes foaming by agitation, foaming by blowing a gas, or a combination thereof.

## EXAMPLES

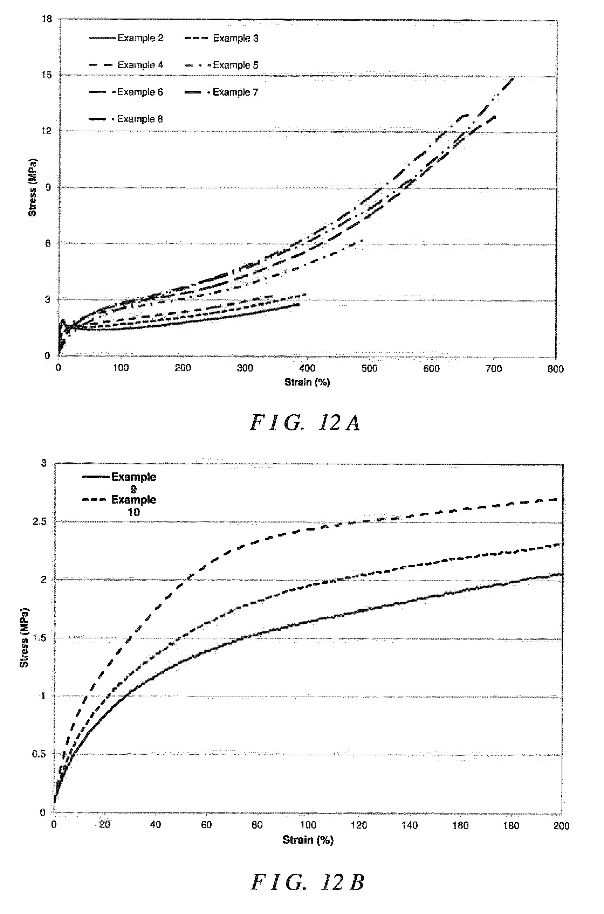

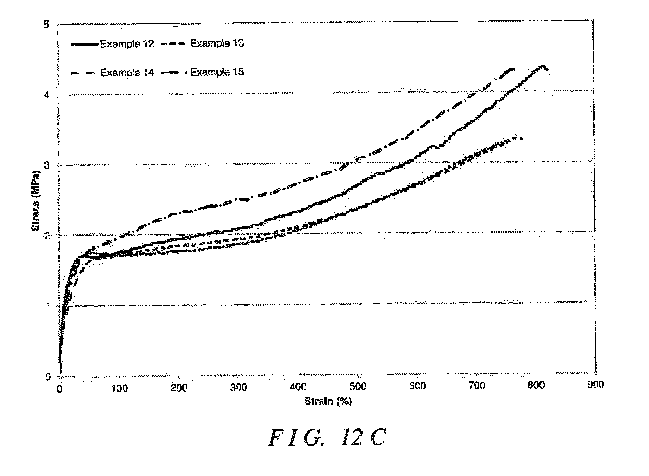

Tables 1 - 4 depict formulations of polyurethane dispersions. Table 1 shows Examples which were prepared using mechanical foaming. Tables 2A and 2B show Examples comprising hollow glass spheres. Table 3 shows Examples comprising polymer microspheres. Table 4 shows Examples comprising glass spheres and polymer microspheres. Examples are prepared as depicted in the tables and foamed by the indicated method. The Examples are layered through a Wet Gap and then cured in an oven between 60 and 160 °C. FIGs. 12A-C depict the stress-strain curves of polyurethane sheets made according to the Examples below.

Table 1

| Foaming Method | | **Mechanical Foaming** |
|---|---|---|
| | Unit | Example 1 |
| Raw material | | |
| Impranil1069 | g | 200 |
| Stokal STA | g | 6 |
| Stokal SR | g | 6 |
| Borchigel ALA | g | 3 |
| ST-9695 | g | 12 |
| IPA | g | 1 |
| Cymel 325 | g | 3 |
| | | |
| Froth Density | g/L | 577 |
| Froth Viscosity | cps | 3520 |
| Wet Gap | mm | 0.25 |
| | | |
| Density | g/cm$^3$ | 0.285 |
| Thickness | mm | 0.1 |

Table 2A

| Foaming Method | | **Foaming by Hollow Glass Bead, No mechanical foaming** | | |
|---|---|---|---|---|
| | | Example 2 | Example 3 | Example 4 |
| Raw material | unit | | | |
| Impranil 1554 | g | 200 | 200 | 200 |

(continued)

| Foaming Method | | Foaming by Hollow Glass Bead, No mechanical foaming | | |
|---|---|---|---|---|
| | | Example 2 | Example 3 | Example 4 |
| Raw material | unit | | | |
| Borchigel ALA | g | 3.6 | 3.6 | 3.6 |
| ST-9695 | g | 12 | 12 | 12 |
| 3M™ Glass Bubbles K1 | g | 80 | 60 | 40 |
| | | | | |
| Froth Viscosity | cps | 13580 | 12500 | 11900 |
| Wet Gap | mm | 0.25 | 0.25 | 0.25 |
| | | | | |
| Density | g/cm$^3$ | 0.74 | 0.79 | 0.88 |
| Thickness | mm | 0.127 | 0.118 | 0.1 |

Table 2B

| Foaming Method | | Foaming by Hollow Glass Bead, No mechanical foaming | | | |
|---|---|---|---|---|---|
| | | Example 5 | Example 6 | Example 7 | Example 8 |
| Raw material | unit | | | | |
| Impranil 1554 | g | 200 | 200 | 200 | 200 |
| Borchigel ALA | g | 3.6 | 3.6 | 3.6 | 3.6 |
| ST-9695 | g | 12 | 12 | 12 | 12 |
| 3M™ Glass Bubbles K1 | g | 20 | 10 | 4 | 0 |
| | | | | | |
| Froth Viscosity | cps | 11900 | 12450 | 12500 | 12640 |
| Wet Gap | mm | 0.25 | 0.25 | 0.25 | 0.25 |
| | | | | | |
| Density | g/cm$^3$ | 0.95 | 1.02 | 1.03 | 1.13 |
| Thickness | mm | 0.099 | 0.09 | 0.092 | 0.086 |

Table 3

| Foaming Method | | Foaming by Polymer Microsphere, No mechanical foaming | | |
|---|---|---|---|---|
| | | Example 9 | Example 10 | Example 11 |
| Raw material | unit | | | |
| Impranil 1380 | g | 200 | 200 | 200 |
| Borchigel ALA | g | 3.6 | 3.6 | 3.6 |
| ST-9695 | g | 12 | 12 | 12 |
| Expancel 053DU40 | g | 6 | 10 | 20 |
| | | | | |
| Froth Viscosity | Cps | 9860 | 8520 | 7640 |

(continued)

| Foaming Method | | Foaming by Polymer Microsphere, No mechanical foaming | | |
|---|---|---|---|---|
| | | Example 9 | Example 10 | Example 11 |
| Raw material | unit | | | |
| Wet Gap | mm | 0.25 | 0.25 | 0.25 |
| | | | | |
| Density | g/cm$^3$ | 0.93 | 0.79 | 0.63 |
| Thickness | mm | 0.116 | 0.121 | 0.130 |

Table 4

| Foaming Method | | Foaming by both Glass Bead and Polymer Microsphere, No mechanical foaming | | | |
|---|---|---|---|---|---|
| | | Example 12 | Example 13 | Example 14 | Example 15 |
| Raw material | unit | | | | |
| Impranil 1380 | g | 200 | 200 | 200 | 200 |
| Borchigel ALA | g | 3.6 | 3.6 | 3.6 | 3.6 |
| ST-9695 | g | 12 | 12 | 12 | 12 |
| 3M™ Glass Bubbles K1 | g | 40 | 40 | 40 | 20 |
| Expancel 053DU40 | g | 6 | 10 | 20 | 20 |
| | | | | | |
| Froth Viscosity | Cps | 11220 | 10860 | 8860 | 10250 |
| Wet Gap | mm | 0.25 | 0.25 | 0.25 | 0.25 |
| | | | | | |
| Density | g/cm$^3$ | 0.86 | 0.71 | 0.61 | 0.68 |
| Thickness | mm | 0.132 | 0.146 | 0.143 | 0.132 |

Accelerated Exposure to UV-light Tests

Two conventional samples, Comparison Samples C and D were prepared using a conventional polyurethane formed from polyether polyol and methylene diphenyl diisocyanate (MDI). The samples were tested against one sample which was prepared according to Example 7 (Table 5)

Table 5

| | Example 16 |
|---|---|
| Raw material | weight/g |
| Impranil 1380 | 200 |
| Stokal STA | 6 |
| Stokal SR | 6 |
| Borchigel ALA | 3 |
| IPA | 1 |
| Cymel 325 | 3 |

Tensile properties were measured according to ASTM standard D412-C with 5K N load cell at a rate of 12 inch/min. CIE Lab values were determined using a Hunter Lab model UltraScan PRO spectrophotometer. Samples were exposed to UV light according to standard SAE J1960 (Revised Aug, 2003). Tables 6 and 7 depict the results of the testing.

Table 6

| | Thickness (mm) | Density (g/cm$^3$) | Maximum Tensile Stress (N/mm$^2$) at t=0hr | Maximum Tensile Stress (N/mm$^2$) a t=162hr | Tensile Stress (%) at t=0hr | Tensile Stress (%) at t=162hr | Loss of Tensile stress (%) |
|---|---|---|---|---|---|---|---|
| Comparison Sample C | 0.60 | 0.65 | 1.57 | 0.37 | 462.12 | 151.72 | 67.2 |
| Comparison Sample D | 0.60 | 0.69 | 1.90 | 0.39 | 304.76 | 82.3 | 73.0 |
| Example 16 | 0.44 | 0.48 | 3.71 | 1.94 | 511.56 | 455.76 | 10.9 |

Table 7

| | CIE at t=0hr | | | CIE at t=162hr | | | | |
|---|---|---|---|---|---|---|---|---|
| | L | a | b | L | a | b | Discoloration $\Delta E$ | Yellowing $\Delta b$ |
| Comparison Sample C | 92.87 | -5.45 | 16.82 | 81.47 | 2.19 | 43.43 | 29.9 | 26.6 |
| Comparison Sample D | 92.8 | -4.91 | 15.34 | 83.39 | 1.03 | 41.76 | 28.7 | 26.4 |
| Example 16 | 94.67 | -0.88 | 1.72 | 94.36 | -0.58 | 1.21 | 0.65 | 0.49 |

As can be noted from the above shown test results, samples using a PUD as a precursor show unexpectedly higher retention of tensile strength after 162 hrs of UV radiation. Moreover, while Comparison Samples C and D show a large discoloration after accelerated UV exposure, samples having a foam core from PUD dispersion have only a minimal color change that is not noticeable to the human eye.

Thin Gauge Elasticity Test

Elasticity tests of thin gauge tapes are determined as following. In the Thin Gauge Elasticity Test, the length a sample in the form of a stripe is measured to provide $l_o$. Then, strain is applied so that the sample is slowly expanded lengthwise to about between 3 to 4 times of its unexpanded length over the duration of at least 10 minutes. After that, the stress is quickly returned to zero and the length after the elasticity test is measured to provide $l_a$. The elasticity equals $(l_a-l_o)/l_o$.

In a first test, a commercial polyethylene sample (Comparison Sample E) having a length of 7.61 mm, a width of 5.00 mm, and a thickness 0.10 mm was expanded to 337.8% of its original length over the course of about 12.18 minutes and then released. The measured elasticity after another 30 minutes was measured to be 120.5%

In a second test, a polyurethane sample (Example 6) having a length of 5.36 mm, a width of 5.00 mm, and a thickness 0.10 mm was expanded to 368.7% of its original length over the course of about 13.05 minutes and then released. The measured elasticity after another 30 minutes was measured to be less than 2%.

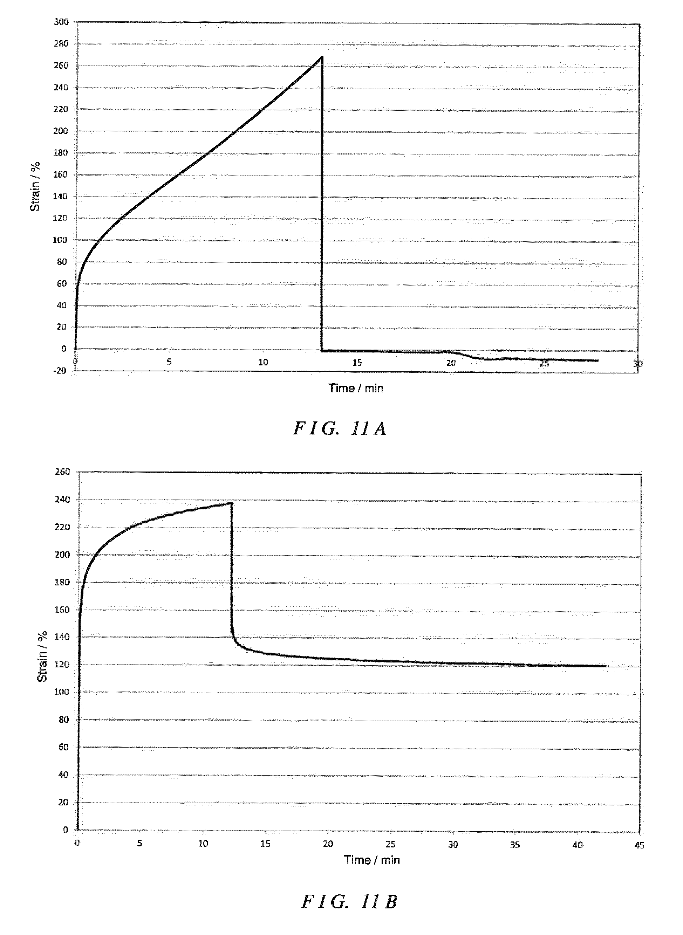

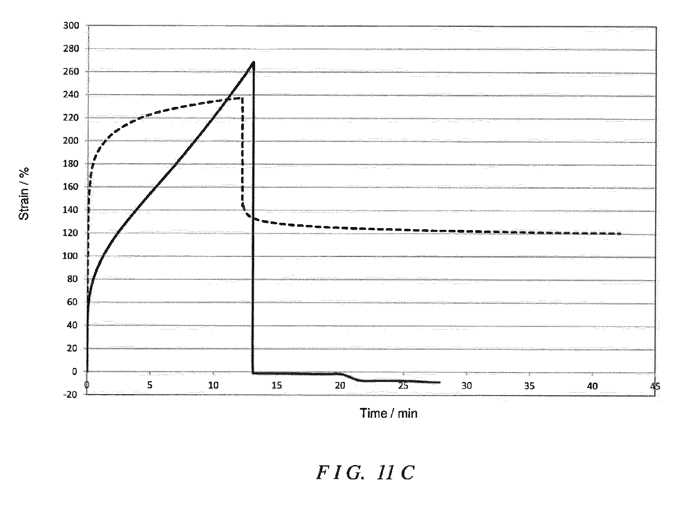

FIGs. 11A-11C depict the Thin Gauge Elasticity Tests results. FIG. 11A is the curve measured of the second test, i.e. the polyurethane sample according to Example 5. FIG. 11B depicts the curve for Comparison Sample E. FIG. 11C is a superposition of the two curves. As can be seen, the polyurethane sample returns substantially to its original length while the comparison sample shows a resulting elasticity of about 120%.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

After reading the specification, skilled artisans will appreciate that certain features are, for clarity, described herein in the context of separate embodiments, may also be provided in combination in a single embodiment. Conversely, various features that are, for brevity, described in the context of a single embodiment, may also be provided separately or in any subcombination. Further, references to values stated in ranges include each and every value within that range.

**Claims**

1. A polymer sheet comprising:

   a polyurethane core, having a first major surface and a second major surface opposite the first major surface; and
   at least one functional layer, wherein the polymer sheet has a thickness $t_{PS}$ and the polyurethane core has a thickness $t_{PC}$, wherein $t_{PC}$ is at least 0.3 of $t_{PS}$,

   wherein the polyurethane core comprises a polyurethane polymer, wherein the polyurethane core has at least one feature selected from the group consisting of:

   (i) an elasticity as measured according to the Thin Gauge Elasticity Test of not more than 30%,
   (ii) a loss of tensile strength of not greater than 30% when exposed to UV light according to standard SAE J1960 (Rev. August 2003),
   (iii) a thickness of polyurethane core $t_{PC}$ of not greater than 0.2 mm,
   (iv) an elongation at break of at least 200 %, and
   (v) a tensile strength at break of at least 0.3MPa.

2. The polymer sheet according to claim 1, wherein the polymer sheet has a primary aspect ratio of at least about 200.

3. The polymer sheet according to claim 1 or 2, wherein the functional layer is selected from the group of a release liner, a topcoat, an adhesive, or any combination thereof.

4. The polymer sheet according to one of claims 1 to 3, wherein the functional layer comprises a topcoat, and wherein the topcoat includes an acrylic coating, a polyurethane coating, or a combination thereof.

5. The polymer sheet according to one of claims 1 to 4, wherein the functional layer comprises a topcoat, and wherein the topcoat includes a silicone modified polyurethane coating.

6. The polymer sheet according to one of claims 1 to 5, wherein the functional layer has thickness in a range of from about 0.001 mm to about 0.01 mm.

7. The polymer sheet according to one of claims 1 to 6, wherein the functional layer comprises an adhesive, and wherein the adhesive is a pressure sensitive adhesive selected from an acrylic adhesive, a silicon adhesive, a rubber hot melt adhesive, an acrylic copolymer, a rubber acrylic copolymer, or any combination thereof.

8. The polymer sheet according to one of claims 1 to 7, wherein the polymer sheet is in form of a roll.

9. An assembly comprising:

a first member and a second member; and
a bonding tape compressed between the first member and the second member, wherein the bonding tape includes a polyurethane core, having a first major surface and a second major surface opposite the first major surface; and
the bonding tape is compressed between the first and the second member at a compression of at least about 5%,

wherein the polyurethane core comprises polyurethane polymer, wherein the polyurethane core has at least one feature selected from the group consisting of:

(i) an elasticity as measured according to the Thin Gauge Elasticity Test of not more than 30%,
(ii) a loss of tensile strength of not greater than 30% when exposed to UV light according to standard SAE J1960 (Rev. August 2003),
(iii) a thickness of polyurethane core $t_{PC}$ of not greater than 0.2 mm,
(iv) an elongation at break of at least 200 %, and
(v) a tensile strength at break of at least 0.3MPa.

10. The assembly according to claim 9, wherein the assembly is an electronic device and the first member and the second member are components of the electronic device.

11. The assembly according to claim 10, wherein the components are selected from a circuit, a display part, an electronic screen, an electronic screen cover, a frame, a housing part, or any combination thereof, and, wherein the at least one of the components is an electronic screen, the electronic screen including diodes, and wherein the diodes include LEDs or LCDs.

12. The polymer sheet or assembly of any one of claims 1 to 11, wherein the thickness in an uncompressed state of the polyurethane core is in a range of from about 0.05 mm to about 0.20 mm.

13. The polymer sheet or assembly of any one of claims 1 to 12, wherein the elasticity is in a range of from 0.0001% to 30%.

14. The polymer sheet or assembly of any one of claims 1 to 13, wherein the loss of tensile strength when exposed to UV light according to standard SAE J1960 (Rev. August 2003) is not greater than about 25%.

15. A method of preparing a polymer sheet, the method comprising

preparing a polyurethane dispersion;
casting the polyurethane dispersion onto a liner;
treating the polyurethane dispersion to have a uniform thickness;
drying the polyurethane dispersion to form a polyurethane core, wherein the polyurethane core has at least one feature selected from the group consisting of:

(i) an elasticity as measured according to the Thin Gauge Elasticity Test of not more than 30%,
(ii) a loss of tensile strength of not greater than 30% when exposed to UV light according to standard SAE J1960 (Rev. August 2003),
(iii) a thickness in an uncompressed state of not greater than 0.2 mm,
(iv) an elongation at break of at least 200 %, and
(v) a tensile strength at break of at least 0.3MPa.

100

1044
102
1042

*FIG. 1*

200

206
102
204

*FIG. 2*

300

206
102
204
308

*FIG. 3*

400

4044
402
406
402
4042

*FIG. 4*

500

510
402
406
402
508

*FIG. 5*

600

510
402
406
402
508
612

*FIG. 6*

FIG. 7

FIG. 8A

FIG. 8B

900

906
904
902

904
906

**FIG. 9**

1000

906

904    904

902    906

**FIG. 10**

*FIG. 11A*

*FIG. 11B*

*F I G. 11 C*

*F I G. 12 A*

*F I G. 12 B*

*F I G. 12 C*

Europäisches
Patentamt

European
Patent Office

Office européen
des brevets

## EUROPEAN SEARCH REPORT

**Application Number**

EP 14 18 6239

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 612 886 A1 (NITTO DENKO CORP [JP]) 10 July 2013 (2013-07-10) * examples B-1 * ----- | 1-15 | INV. B32B5/18 B32B7/12 B32B27/06 |
| X | US 2007/015424 A1 (TOAS MURRAY S [US] ET AL) 18 January 2007 (2007-01-18) * paragraph [0076]; table 40 * ----- | 1-15 | B32B27/40 C09J7/02 H05K9/00 C08J9/36 |
| X | US 2006/079589 A1 (TADOKORO SHIGERU [JP] ET AL) 13 April 2006 (2006-04-13) * example 1; table 1 * * example 6 * ----- | 1-15 | |
| X | US 5 658 630 A (SHIZUKUDA HARUO [JP] ET AL) 19 August 1997 (1997-08-19) * claims 2,4 * * column 6, lines 41-48, 59-67 * ----- | 1-15 | |
| X | JP 2008 006592 A (INOUE MTP KK) 17 January 2008 (2008-01-17) * abstract * * paragraphs [0005], [0016] - [0018], [0045], [0067]; example 1 * ----- | 1-15 | TECHNICAL FIELDS SEARCHED (IPC) B32B C09J H05K C08J |
| A | EP 0 917 419 A1 (SEIREN CO LTD [JP]) 19 May 1999 (1999-05-19) * claims 1,5,15-17; example 1 * * paragraph [0014] * ----- | 1-15 | |

The present search report has been drawn up for all claims

| Place of search | Date of completion of the search | Examiner |
|---|---|---|
| The Hague | 11 March 2015 | Yildirim, Zeynep |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

    ..........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 14 18 6239

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2015

| Patent document cited in search report | | Publication date | Patent family member(s) | | Publication date |
|---|---|---|---|---|---|
| EP 2612886 | A1 | 10-07-2013 | EP | 2612886 A1 | 10-07-2013 |
| | | | KR | 20140005863 A | 15-01-2014 |
| | | | TW | 201221564 A | 01-06-2012 |
| | | | US | 2013224467 A1 | 29-08-2013 |
| US 2007015424 | A1 | 18-01-2007 | EP | 1907207 A1 | 09-04-2008 |
| | | | US | 2007015424 A1 | 18-01-2007 |
| | | | WO | 2007010388 A1 | 25-01-2007 |
| US 2006079589 | A1 | 13-04-2006 | JP | 3776428 B2 | 17-05-2006 |
| | | | JP | 2004216880 A | 05-08-2004 |
| | | | TW | 200415188 A | 16-08-2004 |
| | | | US | 2006079589 A1 | 13-04-2006 |
| US 5658630 | A | 19-08-1997 | NONE | | |
| JP 2008006592 | A | 17-01-2008 | NONE | | |
| EP 0917419 | A1 | 19-05-1999 | AU | 2044397 A | 25-02-1998 |
| | | | CN | 1227702 A | 01-09-1999 |
| | | | DE | 69723560 D1 | 21-08-2003 |
| | | | DE | 69723560 T2 | 09-06-2004 |
| | | | EP | 0917419 A1 | 19-05-1999 |
| | | | JP | 3306665 B2 | 24-07-2002 |
| | | | KR | 20000029805 A | 25-05-2000 |
| | | | TW | 448452 B | 01-08-2001 |
| | | | US | 6569789 B1 | 27-05-2003 |
| | | | WO | 9806247 A1 | 12-02-1998 |

EPO FORM P0459

For more details about this annex : see Official Journal of the European Patent Office, No. 12/82

**REFERENCES CITED IN THE DESCRIPTION**

**Patent documents cited in the description**

- CN 201310446476
- US 61908435 A